# EUROPEAN PATENT APPLICATION

(11) **EP 4 358 435 A1**
(43) Date of publication of application: **24.04.2024**
(21) Application number: 22202566.0
(22) Date of filing: 19.10.2022
(51) Int. Cl.: H04B 10/25, H04B 10/40

(54) **TRANSCEIVER DEVICE FOR A COMMUNICATION NETWORK, COMMUNICATION NETWORK AND METHOD OF DETECTING A SINGLE TRANSMISSION LINE FAILURE**

(71) Applicant: Rohde & Schwarz GmbH & Co. KG, 81671 München (DE)
(72) Inventor: Wolff, Julian, 81671 München (DE)
(74) Representative: Prinz & Partner mbB

(57) **Abstract**

A transceiver device (12, 14) for a communication network (10) is described. The transceiver device (12, 14) comprises an input-output (I/O) port (18), a receiver module (20), a transmitter module (22), and a control module (28). The I/O port (18) is connectable to a transceiver cable (16) for data transmission and reception. The receiver module (20) is configured to receive signals via the I/O port (18). The transmitter module (22) is configured to generate transmission signals, and to transmit the generated transmission signals via the I/O port (18). The control module (28) is configured to detect a link loss associated with signals received via the I/O port (18). The control module (28) is configured to deactivate the transmitter module (22) if a link loss is detected. The control module (28) is configured to reactivate the transmitter module (22) according to a reactivation schedule. Further, a communication network (10) and method of detecting a single transmission line failure in a communication network (10) are described.

## Description

The present invention generally relates to a transceiver device for a communication network. The present invention further relates to a communication network and to a method of detecting a single transmission line failure in a communication network.

In communication networks covering large or different areas, it is common practice to monitor the connections within the network. If a communication network node detects a failure of a connection leading to the respective node, the network node reports this failure to other nodes on its side of the communication network.

For transmission of data, two network nodes are typically connected via a cable comprising at least two transmission lines, wherein one transmission line conducts signals from the first node to the second node, and wherein a second transmission line conducts signals from the second node to the first node.

As long as a failure concerns both transmission lines, no problem arises with the usual monitoring techniques, as the failure is reported to both sides of the communication network.

However, if the failure concerns only a single transmission line, the node transmitting on the correctly functioning transmission line may not realize the failure at all. Thus, the failure may be reported only to a single side of the communication network.

Further, known monitoring techniques require human intervention, as an operator has to manually reset the communication between the nodes after the failure is fixed.

Accordingly, the object of the present invention is to provide a transceiver device as well as a method that allow for detecting single transmission line failures and that can resume operation without human intervention.

According to the invention, the problem is solved by a transceiver device for a communication network. The transceiver device comprises an input-output (I/O) port, a receiver module, a transmitter module, and a control module. The I/O port is connectable to a transceiver cable for data transmission and reception. The receiver module is configured to receive optical signals via the optical I/O port. The transmitter module is configured to generate transmission signals, and to transmit the generated transmission signals via the I/O port. The control module is configured to detect a link loss associated with signals received via the I/O port. The control module is configured to deactivate the transmitter module if a link loss is detected. The control module is configured to reactivate the transmitter module according to a reactivation schedule.

In general, the transceiver cable may be an optical cable comprising at least two optical transmission lines, i.e. at least two optical fibers, or an electrical cable comprising at least two electrical transmission lines, e.g. at least two copper wires.

Accordingly, the I/O port may be an optical I/O port being configured to receive and transmit optical signals, or an electrical I/O port being configured to receive and transmit electrical signals.

As the transmitter module is deactivated if a link loss is detected, the transceiver device stops transmitting signals as soon as a link loss is detected. Accordingly, a further transceiver device that is connected to the transceiver device may also detect a link loss, even if the corresponding link is working correctly.

In other words, a link loss is induced at the further transceiver device, such that a link loss occurs in both transmission directions and can be reported on both sides of the communication network associated with the transceiver device and the further transceiver device. Thus, the link loss due to a malfunction of a single transmission line (i.e. a single optical fiber or a single electrical wire) can be detected on both sides of the communication network associated with the transceiver device and with the further transceiver device, such that single transmission line failures can be detected reliably on both sides of the malfunctioning transmission line.

The transmitter module is automatically reactivated according to the reactivation schedule, i.e. for certain time intervals at certain points in time.

The same may apply to the further transceiver device, i.e. the transmitter module of the further transceiver device is deactivated due to the detected (induced) link loss, and reactivated according to a reactivation schedule.

In fact, the reactivation schedule is configured such that there is a high probability of the two transceiver devices resuming simultaneous transmission within a certain time interval.

Accordingly, the connection between the transceiver devices is automatically reestablished without an intervention by a human operator.

In fact, the reactivation schedule may be configured such that the probability of the two transceiver devices resuming simultaneous transmission within a predefined time interval is larger than a predefined threshold probability.

For example, the threshold probability may be equal to 75%, 90%, 95%, or 99%. However, other threshold probabilities are possible.

The predefined time interval may be equal to one minute, 30s, 15s, 5s, 1s or 0.5s. However, other predefined time intervals are possible.

If the I/O port is an optical I/O port, the transmitter module comprises a light source that is configured to generate the (optical) transmission signals. Accordingly, the light source may be deactivated in order to deactivate the transmitter module.

For example, the light source is a laser.

According to an aspect of the present invention, the transceiver device is established as a network router. Accordingly, the transceiver device may be configured to distribute data received via the I/O port to other devices or nodes in the communication network.

In an embodiment of the present invention, the reactivation schedule is random or pseudorandom. In other words, instead of providing a fixed schedule for reactivating the transmitter module, the transmitter module is reactivated at (pseudo)random times and/or for (pseudo)random time intervals. In fact, it has turned out that the time necessary for two connected transceiver devices resuming simultaneous transmission is reduced if both transceiver devices follow a random or pseudorandom reactivation schedule, particularly the same random or pseudorandom reactivation schedule.

In a further embodiment of the present disclosure, the control module comprises a random number generator, wherein the random number generator is configured to generate a random number or a pseudorandom number, and wherein the control module is configured to reactivate the transmitter module based on the generated random or pseudorandom number. In other words, the (pseudo)random times and/or (pseudo)random time intervals at which the transmitter module is reactivated may be determined based on the random number or the pseudorandom number, respectively. Such (pseudo)random number generators can be implemented with a small amount of computational resources. Thus, the costs for manufacturing the transceiver device are reduced.

According to another aspect of the present invention, an initial seed of the random number generator is a temperature of a predetermined portion of the transceiver device, particularly of a predetermined portion of the control module. It has turned out that the temperature of the certain portions of the transceiver device, particularly of the control module, fluctuates in an unpredictable, random manner. Thus, the initial seed of the random number generator fluctuates in a random manner, such that the number generated by means of the random number generator is truly random.

A further aspect of the present invention provides that the random number generator is embedded in an FPGA. Accordingly, the control module may comprise the FPGA with the random number generator embedded. This way, the random number generator can be integrated into the control module in a particularly compact and resource-efficient manner.

The initial seed of the random number generator may be a temperature of the FPGA. The advantages discussed above likewise apply.

In an embodiment of the present invention, the reactivation schedule comprises activation times and/or activation intervals. In other words, the reactivation schedule may specify at which points in time the transmitter module is reactivated. Alternatively or additionally, the reactivation schedule may specify for how long the transmitter module is reactivated.

The transceiver device may comprise at least one further I/O port, wherein the transceiver device is configured to report the link loss via the at least one further I/O port. The transceiver device may be connected to at least one further network node of the communication network via the at least one further I/O port. Accordingly, the detected link loss may be reported to other devices in the communication network that are directly or indirectly connected with the transceiver device via the at least one further I/O port. Thus, operators or system administrators of the communication network are made aware of the link loss, as the detected link loss is reported by the transceiver device.

In fact, the transceiver device may be configured to perform a so-called "link loss carry forward" (LLCF), i.e. the transceiver device may stop transmitting signals via the at least one further I/O port. This way, other devices connected to the transceiver device via the at least one further I/O port may detect a corresponding induced link loss, and may stop transmitting signals themselves, such that the link loss propagates through the communication network and can be detected by an operator managing a certain node in the communication network.

According to the invention, the problem further is solved by a communication network. The communication network comprises at least two transceiver devices described above, wherein the at least two transceiver devices are connected with each other via a transceiver cable, particularly via an optical cable.

Regarding the further advantages and properties of the communication network, reference is made to the explanations given above with respect to the transceiver device, which also hold for the communication network and vice versa.

Of course, the communication network may comprise more than two transceiver devices. In fact, the communication network may comprise an arbitrary number of transceiver devices described above.

According to an aspect of the present invention, the at least two transceiver devices are associated with different communication sub-networks. Accordingly, the at least two transceiver devices may comprise at least one further I/O port, respectively. The at least two transceiver device may be connected with at least one further device of the respective communication sub-network via the at least one further I/O port, respectively.

If a transceiver device comprises at least two further I/O ports, the respective transceiver device may be connected with at least two further devices of the respective communication sub-network.

In general, the communication network may comprise a plurality of transceiver devices described above, wherein pairs of transceiver devices are connected with each other via their respective I/O ports.

It is also conceivable that one or several transmission lines of the transceiver cable are spliced, such that at least one of the transceiver devices may be connected to at least two further transceiver devices via the transceiver cable.

In an embodiment of the present invention, the at least two transceiver devices are configured to report the link loss to the respectively associated communication sub-network. As described above, the at least two transceiver devices may be connected to at least one further network node of the respective communication sub-network via the at least one further I/O port. respectively. Accordingly, the detected link loss may be reported to other devices in the communication network that are directly or indirectly connected with the at least two transceiver devices via the at least one further I/O port. Thus, operators or system administrators of the communication network in both communication sub-networks are made aware of the link loss, as the detected link loss is reported by both transceiver devices.

In fact, the at least two transceiver devices may be configured to perform a so-called "link loss carry forward" (LLCF), i.e. the at least two transceiver devices may stop transmitting signals via the at least one further I/O port. This way, other devices connected to the at least two transceiver devices via the respective further I/O port may detect a corresponding induced link loss, and may stop transmitting signals themselves, such that the link loss propagates through both communication sub-networks and can be detected by an operator managing certain nodes in the communication sub-networks.

According to the present invention, the problem further is solved by a method of detecting a single transmission line failure in a communication network, wherein the communication network comprises a first transceiver device and a second transceiver device. The method comprises the following steps:
- detecting, by means of the first transceiver device, a first link loss relating to signals received from the second transceiver device;
- deactivating data transmission from the first transceiver device to the second transceiver device, thereby inducing a second link loss;
- detecting, by means of the second transceiver device, the induced second link loss relating to signals received from the first transceiver device;
- deactivating data transmission from the second transceiver device to the first transceiver device;
- reactivating data transmission from the first transceiver device according to a first reactivation schedule; and
- reactivating data transmission from the second transceiver device according to a second reactivation schedule.

Particularly, the communication network described above may be configured to perform the method of detecting a single transmission line failure.

Regarding the advantages and further properties of the method, reference is made to the explanations given above with respect to the transceiver device and the communication network, which also hold for the method and vice versa.

According to an aspect of the present invention, the first reactivation schedule and the second reactivation schedule are generated based on the same algorithm. It has turned out that the time necessary for two connected transceiver devices resuming simultaneous transmission is reduced if the reactivation schedules are generated based on the same algorithm.

Particularly, the first reactivation schedule and the second reactivation schedule are generated independent of each other. In fact, the first reactivation schedule and the second reactivation schedule may be generated based on the same algorithm, but independent of each other.

For example, each transceiver device may comprise a random number generator as described above, wherein the random number generators are functionally identical. Initial seeds of the random number generators may be temperatures of respective portions of transceiver device, particularly of the respective control module, for example of an FPGA of the respective control module.

Thus, in spite of the random number generators being functionally identical, each random number generator receives a random initial seed, such that the corresponding random numbers generated are independent of each other. As a result, the reactivation schedules are also generated independent of each other.

In a further embodiment of the present invention, the first reactivation schedule is random or pseudorandom, and/or wherein the second reactivation schedule is random or pseudorandom. In other words, instead of providing fixed schedules for reactivating the transmitter modules of the transceiver devices, the transmitter modules are reactivated at (pseudo)random times and/or for (pseudo)random time intervals, respectively. In fact, it has turned out that the time necessary for the two connected transceiver devices resuming simultaneous transmission is reduced if both transceiver devices follow a random or pseudorandom reactivation schedule, particularly the same random or pseudorandom reactivation schedule.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a communication network according to the present invention;
- Figure 2 shows a flow chart of a method of detecting a single optical fiber failure in the communication network of Figure 1 according to the present invention; and
- Figure 3 shows a diagram illustrating reactivation schedules.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

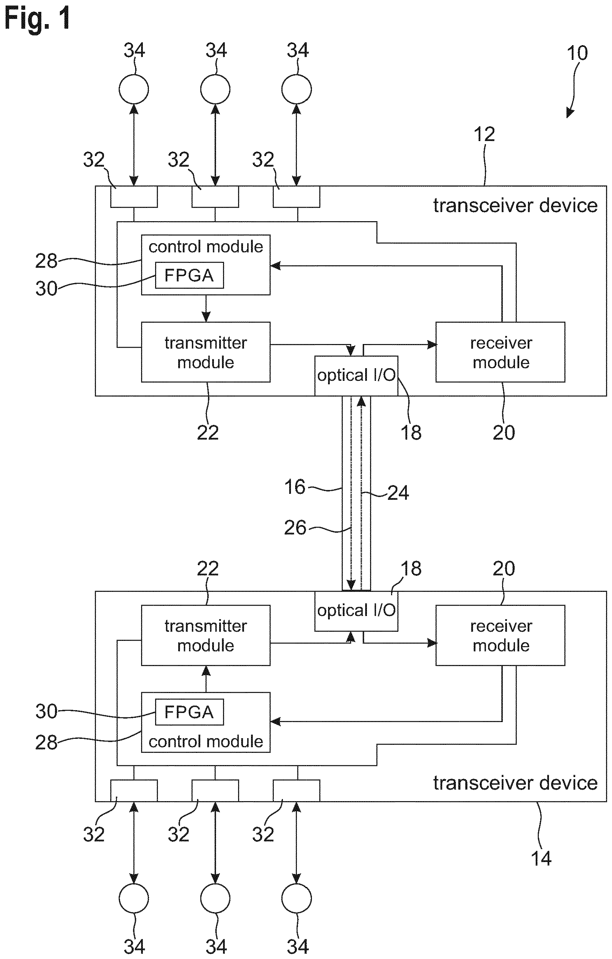

Figure 1 schematically shows a communication network 10 comprising a first transceiver device 12 and a second transceiver device 14 that are connected with each other via a transceiver cable 16.

In the following, it is assumed without restriction of generality that the transceiver cable 16 is an optical cable, i.e. that the transceiver devices 12, 14 are configured to communicate with each other via optical signals.

However, it is to be understood that the transceiver cable 16 may alternatively be an electrical cable comprising electrically conducting transmission lines, e.g. copper wires. The explanations given hereinafter likewise apply to this case.

In the exemplary embodiment shown in figure 1, the first transceiver device 12 and the second transceiver device 14 are configured substantially identical. Accordingly, only the first transceiver device 12 is described hereinafter, wherein the explanations likewise apply to the second transceiver device 14.

However, it is to be understood that the second transceiver device 14 may be configured different from the first transceiver device 12.

In general, the first transceiver device 12 may be established as any electronic device that is configured to communicate with other electronic devices of the communication network 10 based on optical signals, optionally also based on electrical signals and/or wireless signals.

Particularly, the first transceiver device 12 may be established as a network router, e.g. as a wireless network router for WLAN applications.

The first transceiver device 12 comprises an optical input-output (I/O) port 18 that is connected with the optical cable 16, such that the first transceiver device 12 may receive and transmit optical signals via the optical I/O port 18 and the optical cable 16.

The first transceiver device 12 further comprises a receiver module 20 and a transmitter module 22 that are connected with the optical I/O port 18 in a signal transmitting manner, respectively.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

In fact, the receiver module 20 is configured to receive optical signals via the optical I/O port 18. The receiver module 20 may be configured to process the optical signal received, for example by converting the optical signal received into a corresponding electrical signal.

The transmitter module 22 is configured to transmit optical signals via the optical I/O port 18.

Accordingly, the transmitter module 22 comprises a light source, for example a laser, that is configured to transmit the optical signals via the optical I/O ports 18.

The optical cable 16 comprises a first optical fiber 24 that allows the first transceiver device 12 to receive optical signals from the second transceiver device 14.

The optical cable 16 further comprises a second optical fiber 26 that allows the first transceiver device 12 to transmit optical signals to the second transceiver device 14.

However, it is to be understood that the optical cable 16 may comprise further pairs of optical fibers, such that further pairs of transceiver devices of the communication network 10 may be connected with each other.

The first transceiver device 12 further comprises a control module 28 that is connected with the receiver module 20 and with the transmitter module 22 in a signal-transmitting manner.

In general, the control module 28 is configured to control the transmitter module 22 to start and stop transmitting signals, particularly based on signals received from the receiver module 20.

The control module 28 comprises a field-programmable gate array (FPGA) 30 with an integrated random number generator. The functionality of the FPGA 30 will be described in more detail below.

The first transceiver device 12 further comprises a plurality of further I/O ports 32 that are connectable with further devices 34 of the communication network 10, e.g. with further nodes of the communication network 10.

In general, the first transceiver device 12 may communicate with the further devices 34 via optical signals, via electrical signals and/or via wireless signals.

Particularly, the receiver module 20 may be configured to receive signals from the further devices 34. The transmitter module 22 may be configured to transmit signals to the further devices 34.

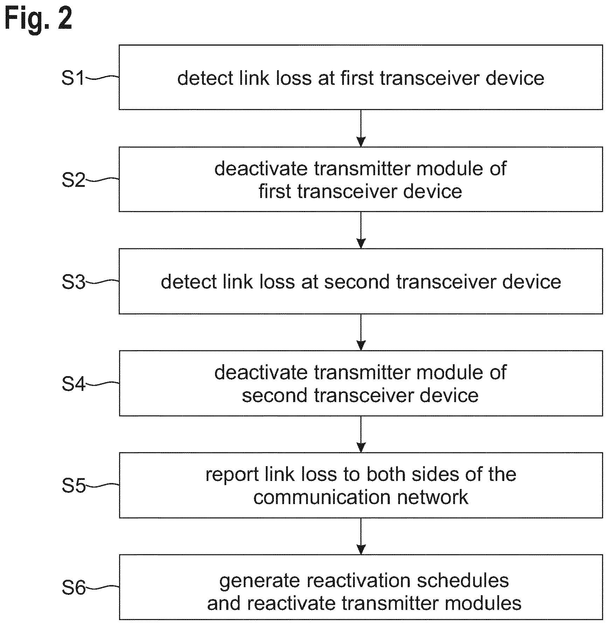

The communication network 10 is configured to perform a method of detecting a single optical fiber failure in the communication network 10, which is described in the following with reference to Figure 2.

In the following, it is assumed without restriction of generality that the first optical fiber 24 is malfunctioning, such that no signals are transmitted from the second transceiver device 14 to the first transceiver device 12.

However, it is to be understood that the explanations given hereinafter likewise apply to a malfunction of the second optical fiber 26.

A link loss is detected by means of the first transceiver device 12, particularly by means of the control module 28 (step S1).

As explained above, a malfunction of the first optical fiber 24 results in the first transceiver device 12 not receiving any more signals from the second transceiver device 14.

Accordingly, the first transceiver device 12 may detect the link loss if no signal has been received from the second transceiver device 14 for a predetermined period of time. In fact, in practice the link loss is detected almost immediately.

If a link loss is detected, the control module 28 deactivates the transmitter module 22, such that no signals are transmitted from the first transceiver device 12 to the second transceiver device 14 (step S2).

Accordingly, the second transceiver device 14 may then also detect a link loss, as no further signals are transmitted from the first transceiver device 12 to the second transceiver device 14 (step S3).

In other words, a link loss is induced by deactivating the transmitter module 22 of the first transceiver device 12.

As a link loss is detected, the control module 28 of the second transceiver device 14 deactivates the transmitter module 22 of the second transceiver device 14, such that no further signals are transmitted from the second transceiver device 14 to the first transceiver device 12 (step S4).

The first transceiver device 12 and the second transceiver device 14 may report the detected link loss to their respectively associated side of the communication network 10, i.e. to the communication sub-network comprising the further devices 34 being connected to the respectively associated transceiver device 12, 14 (step S5).

In fact, the transceiver devices 12, 14 may be configured to perform a so-called "link loss carry forward" (LLCF), i.e. the transceiver devices 12, 14 may stop transmitting signals via the further I/O ports 32.

This way, the further devices 34 connected to the transceiver devices 12, 14 via the further I/O ports 32 may detect a corresponding induced link loss, and may stop transmitting signals themselves.

Accordingly, the link loss propagates through the communication network 10 and can be detected by an operator managing a certain node in the communication network 10.

With the steps of the method described above, single-fiber failures can be reliably detected and reported to both sides of the communication network 10 associated with the first transceiver device 12 and with the second transceiver device 14.

In order to resume communication between the transceiver devices 12, 14 without an intervention of a human operator being necessary, the communication network 10 is further configured to perform the steps described hereinafter.

A reactivation schedule is generated by means of the control modules 28 of the transceiver devices 12, 14, respectively (step S6).

For this purpose, a random number generator may be embedded or rather integrated into the FPGA 30.

In general, the random number generator is configured to generate a sequence of random numbers or of pseudorandom numbers, for example numbers between 1 and 511.

However, other ranges for the generated random numbers or pseudorandom numbers are also possible.

Preferably, an initial seed of the of the random number generator is a temperature of the respective FPGA 30.

As the temperature of the FPGA 30 fluctuates in an unpredictable, random manner, the resulting number generated by the random number generator is indeed random.

Further, the random numbers generated by the random number generators of the transceiver devices 12, 14 are independent of each other, as the temperatures of the FPGAs 30 of the transceiver devices 12, 14 fluctuate independent of each other.

Based on the generated random (or pseudorandom) numbers, reactivation times and/or reactivation intervals are determined by means of the control module 28.

In other words, the (pseudo)random times and/or (pseudo)random time intervals at which the transmitter module 22 is reactivated are/is determined based on the generated (pseudo)random number.

Thus, the reactivation schedule may specify at which points in time the transmitter module 22 is reactivated. Alternatively or additionally, the reactivation schedule may specify for how long the transmitter module 22 is reactivated.

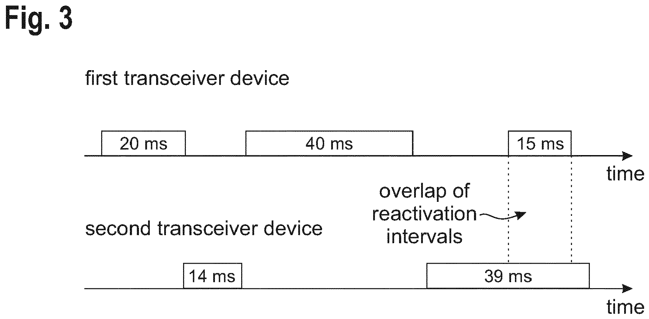

For example, as is illustrated in Figure 3, the (pseudo)random number generated may correspond to the length of the next reactivation interval in milliseconds.

Thus, in the example described above, random reactivation intervals with a length between 1 ms and 511 ms may be scheduled.

Within their respective reactivation intervals, the transmitter modules 22 of the first transceiver device 12 and of the second transceiver device 14 try to transmit signals to the second transceiver device 14 and to the first transceiver device 12, respectively.

If the transceiver devices 12, 14 do not receive a signal via the optical cable 16 within the corresponding reactivation interval, the transmitter module 22 is deactivated again.

It has turned out that, after the failure of the first optical fiber 24 is fixed, the random setup of the reactivation schedules described above quickly (usually within a few seconds) leads to the situation illustrated on the right hand side of Figure 3, wherein both transceiver devices 12, 14 transmit signals at the same time.

Thus, both transceiver devices 12, 14 receive signals within their respective reactivation interval, such that the transmitter modules 22 are not deactivated again.

Accordingly, the connection between the transceiver devices 12, 14 is automatically reestablished without human intervention.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A transceiver device for a communication network (10), the transceiver device (12, 14) comprising an input-output (I/O) port (18), a receiver module (20), a transmitter module (22), and a control module (28),
wherein the I/O port (18) is connectable to a transceiver cable (16) for data transmission and reception,
wherein the receiver module (20) is configured to receive signals via the I/O port (18),
wherein the transmitter module (22) is configured to generate transmission signals, and to transmit the generated transmission signals via the I/O port (18),
wherein the control module (28) is configured to detect a link loss associated with signals received via the I/O port (18),
wherein the control module (28) is configured to deactivate the transmitter module (22) if a link loss is detected, and
wherein the control module (28) is configured to reactivate the transmitter module according to a reactivation schedule.

2. The transceiver device of claim 1, wherein the transceiver device (12, 14) is established as a network router.

3. The transceiver device according to any one of the preceding claims, wherein the reactivation schedule is random or pseudorandom.

4. The transceiver device according to claim 3, wherein the control module (28) comprises a random number generator, wherein the random number generator is configured to generate a random number or a pseudorandom number, and wherein the control module (28) is configured to reactivate the transmitter module based on the generated random or pseudorandom number.

5. The transceiver device according to claim 4, wherein an initial seed of the random number generator is a temperature of a predetermined portion of the transceiver device (12, 14), particularly of a predetermined portion of the control module (28).

6. The transceiver device according to claim 4 or 5, wherein the random number generator is embedded in an FPGA (30).

7. The transceiver device according to any one of the preceding claims, wherein the reactivation schedule comprises activation times and/or activation intervals.

8. The transceiver device according to any one of the preceding claims, wherein the transceiver device (12, 14) comprises at least one further I/O port (32), and wherein the transceiver device (12, 14) is configured to report the link loss via the at least one further I/O port (32).

9. A communication network, comprising at least two transceiver devices (12, 14) according to any one of the preceding claims, wherein the at least two transceiver devices (12, 14) are connected with each other via a transceiver cable (16), particularly via an optical cable.

10. The communication network of claim 9, wherein the at least two transceiver devices (12, 14) are associated with different communication sub-networks.

11. The communication network of claim 10, wherein the at least two transceiver devices (12, 14) are configured to report the link loss to the respectively associated communication sub-network.

12. A method of detecting a single transmission line failure in a communication network (10), wherein the communication network (10) comprises a first transceiver device (12) and a second transceiver device (14), wherein the method comprises the following steps:
- detecting, by means of the first transceiver device (12), a first link loss relating to signals received from the second transceiver device (14);
- deactivating data transmission from the first transceiver device (12) to the second transceiver device (14), thereby inducing a second link loss;
- detecting, by means of the second transceiver device (14), the induced second link loss relating to signals received from the first transceiver device (12);
- deactivating data transmission from the second transceiver device (14) to the first transceiver device (12);
- reactivating data transmission from the first transceiver device (12) according to a first reactivation schedule; and
- reactivating data transmission from the second transceiver device (14) according to a second reactivation schedule.

13. The method of claim 12, wherein the first reactivation schedule and the second reactivation schedule are generated based on the same algorithm.

14. The method of claim 12 or 13, wherein the first reactivation schedule and the second reactivation schedule are generated independent of each other.

15. The method according to any one of claims 12 to 14, wherein the first reactivation schedule is random or pseudorandom, and/or wherein the second reactivation schedule is random or pseudorandom.
